# EUROPEAN PATENT SPECIFICATION

(11) **EP 2 480 096 B1**
(45) Date of publication and mention of the grant of the patent: **25.02.2015**
(21) Application number: 10779834.0
(22) Date of filing: 27.09.2010
(51) Int. Cl.: A23L 1/182, A23L 1/27

(54) **RICE WHITENING**
REISBLEICHUNG
BLANCHIMENT DU RIZ

(30) Priority: 25.09.2009 GB 0916898
(43) Date of publication of application: 01.08.2012
(73) Proprietor: Buhler Sortex Limited, London E16 2BF (GB)
(72) Inventor: MISHRA, Jyoti Prakash, Hosur Road Bangalore 560 100 (IN); PALANIVEL, Vadivelan, Hosur Road Bangalore 560 100 (IN); SCHEFER, Larissa, CH- 9240 Uzwil (CH); BROCKFELD, Markus, 38126 Braunschweig (DE); BLASS, Detlev, 38667 Bad Harzburg (DE); MÜLLER-FISCHER, Nadine Patrizia, 8713 Uerikon (CH)
(74) Representative: Boden, Keith McMurray
(86) International application number: PCT/GB2010/001809
(87) International publication number: WO 2011/036464

(56) References cited:
- EP-A1- 1 568 284
- JP-A- 56 169 554
- JP-A- 2002 191 994
- US-A- 4 483 244
- US-A- 5 275 836
- US-A1- 2001 033 885
- US-A1- 2004 126 476

## Description

The present invention relates to rice whitening, in particular in the production of white rice.

Document US527836 discloses a process of preparing a rice product from brown rice grains which comprises the following sequential steps (a) milling brown rice grains to remove a controlled proportion of the bran layer therefrom whereby from 2% to 10% of the total weight of the rice grains is removed; (b) hydrating the grains to increase their moisture content to between 20-40%; (c) cooking the grains to gelatinize the starch therein; (d) removing moisture from at least the outer layers of the grains; (e) milling the grains to remove the residual bran layer and germ therefrom.

Document US2001033885 discloses a process of manufacturing no-bran cereal comprising the steps of: (a) adding moisture to polished cereal; (b) mixing and stirring granular material with the moistened polished cereal so as to remove bran stuck on a surface each grain of the polished cereal; and (c) separating the polished cereal from the granular material.

Document US2004/126476 discloses a process for preparing instant rice comprising: a milling step for milling brown rice to remove a controlled proportion of bran layer; a primary immersing step for causing rice grains obtained in the said milling step to absorb water; a primary alpha-type conversion step for converting at least surface layers of the rice grains obtained in the said immersing step to the alpha-structure type; a preliminary drying step for drying the rice grains obtained in the said primary alpha-type conversion step up to a moisture content higher than a moisture content after final drying; a final polishing step for consummatively polishing the rice grains obtained in the said preliminary drying step; a secondary immersing step for causing the rice grains obtained in the said final polishing step to absorb water once again; a secondary alpha-type conversion step for completely converting the rice grains obtained in the said secondary immersing step to the alpha-type; a separation-into-single-grains step for separating the rice grains obtained in the said secondary alpha-type conversion step into single grains; and a final drying step for consummatively drying the rice grains obtained in the said separation-into-single-grains step.

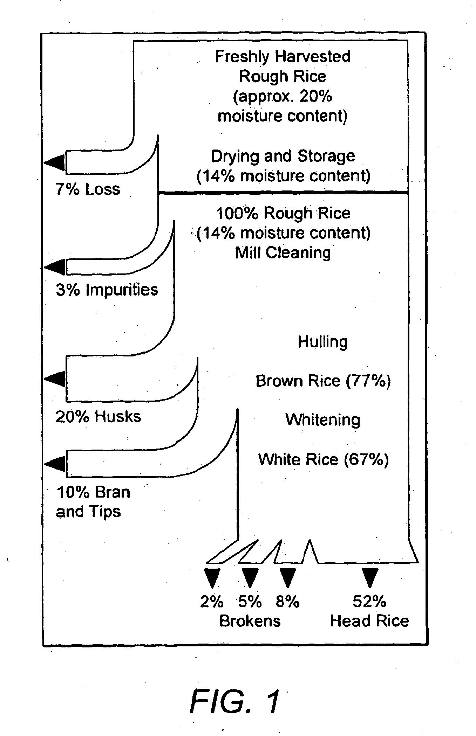

With conventional rice milling, the maximum attainable headrice yield is about 67 %, of which about 15% is broken rice kernels, referred to as brokens, leaving a non-broken headrice yield of about 52 %. Figure 1 is a Sankey diagram illustrating the average attainable yields in conventional milling of American long grain rice [1].

It is an aim of the present invention to provide a rice whitening process which provides for a reduced percentage of brokens for a given whiteness. As will be appreciated, given the amount of rice that is processed globally, any reduction in the percentage of brokens is particularly significant.

It is known in the art to use a water addition to achieve highly-polished rice [2].

The use of enzymes in rice milling is also being developed. Arora *et al [3]* disclose the use of an enzymatic pre-treatment in the milling of brown rice (Basmati), where cellulase is sprayed onto the brown rice and subsequently polished, which provides a reduction in the percentage of brokens. Das *et al* [4, 5] disclose the use of an enzymatic pre-treatment of brown rice (Basmati) using xylanase and cellulase to degrade the bran layers, followed by steaming to complete the gelatinisation process and deactivate the residual enzymes. Hay *et al* [6] disclose the enzymatic maceration of aleurone and subaleurone cells using pectolyase Y-23.

Enzymes are, however, expensive, and their use with different kinds of rice is complicated by the fact that the activity of enzymes depends on many factors, including, for example, the kind of rice, the enzyme concentration, the pH, the ionic buffer strength, the temperature, the contact time and the moisture content.

It is a particular aim of the present invention to provide an improved whitening process, and especially a process which does not require a moistening agent based on an enzyme.

In one aspect the present invention provides a process for whitening rice, comprising the steps of: moistening brown rice with a moistening agent, preferably comprising water and an additive selected from at least one of a sugar or a derivative thereof, including a sugar alcohol, and sodium chloride; and whitening the moistened brown rice, preferably immediately after the moistening step.

In one embodiment the moistening agent comprises water.

In one embodiment the moistening agent contains no enzyme.

In one embodiment the moistening agent further comprises an additive.

In one embodiment the moistening agent is 100 % saturated with the additive at room temperature.

In one embodiment the moistening agent is at least 25 % saturated with the additive at room temperature, preferably at least 50 % saturated with the additive at room temperature, preferably at least 75 % saturated with the additive at room temperature.

In one embodiment the additive comprises less than 10 wt% of the moistening agent, preferably less than 5 wt% of the moistening agent.

In one embodiment the additive is a hygroscopic additive.

In one embodiment the additive comprises at least one of a sugar or a derivative thereof, including a sugar alcohol, and sodium chloride. Sugars include monosaccharides, including glucose, fructose and galactose, and disaccharides, including sucrose and maltose. Other sugar, alcohols include glycol, glycerol, erythritol, threitol, arabitol, xylitol, ribitol, mannitol, dulcitol, iditol, iosmalt, malitol, lactitol and polyglycitol.

In one embodiment the additive comprises a sugar.

In another embodiment the additive comprises a sugar alcohol, preferably sorbitol.

In another embodiment the additive comprises sodium chloride.

In one embodiment the moistening step comprises applying the moistening agent to the brown rice, such as by mixing together the brown rice and the moistening agent.

In one embodiment the moistening agent is applied to the brown rice in a batch process, such as by mixing in a container.

In another embodiment the moistening agent is applied to the brown rice in a continuous process, such as by mixing continuous feeds of the brown rice and the moistening agent.

In one embodiment the moistening agent is applied as a spray or mist.

In one embodiment the moistening agent is applied to the brown rice for less than 2 minutes, preferably less than 1.5 minutes, preferably less than 1 minute or for about 1 minute.

In one embodiment the moistening step includes a rest period following application of the moistening agent to the brown rice.

In one embodiment the rest period is less than 30 minutes, preferably less than 10 minutes, preferably less than 2 minutes, preferably less than 1 minute or about 1 minute.

In one embodiment the moistening agent is added to the brown rice in an amount of less than 2 wt%, preferably less than 1 wt%, preferably less than 0.5 wt%.

In one embodiment the whitening step is performed to achieve a whiteness of 40 Kett.

In one embodiment no whitening step is performed prior to the moistening step.

In one embodiment the step of whitening the moistened brown rice comprises mechanically whitening the moistened brown rice, preferably milling the moistened brown rice.

In one embodiment the process further comprises the step of: separating the headrice from the abraded bran and the brokens.

Preferred embodiments of the present invention will now be described hereinbelow by way of example only with reference to the accompanying drawings, in which:
Figure 1 is a Sankey diagram illustrating the average attainable yields in the conventional milling of American long grain rice (for brokens - 2 % are ¼, 5 % are ½, and 8 % are ¾ of the length of the headrice);
Figure 2 illustrates the processing steps in the methods of Examples #1 to #4; Figure 3 illustrates a plot of whiteness as a function of milling time for given milling weights for the method of Example #1;
Figure 4 illustrates a plot of the percentage of brokens as a function of milling time for given milling weights for the method of Example #1;
Figure 5 illustrates a plot of whiteness and the percentage of brokens as a function of milling time for the pre-whitening step of the method of Example #2;
Figure 6 illustrates a plot of whiteness as a function of milling time for given milling weights following the end-whitening step of the method of Example #2;
Figure 7 illustrates a plot of the percentage of brokens as a function of milling time for given milling weights following the end-whitening step of the method of Example #2;
Figure 8 illustrates a plot of the percentage of brokens as a function of whiteness for various samples following the end-whitening step of the method of Example #3;
Figure 9 illustrates, in enlarged scale, section A in the plot of Figure 8;
Figure 10 illustrates a plot of the percentage of brokens as a function of whiteness for various samples following the end-whitening step of the method of Example #4;
Figure 11 illustrates the processing steps in the method of Example #5; and Figures 12(a) to (d) illustrate plots of whiteness as a function of percentage of saturation of the additive in the moistening agent for milling times of 10 s, 20 s, 30s and 1 minute following the method of Example #5.

The present invention will now be described with reference to the following nonlimiting Examples.

### Example #1

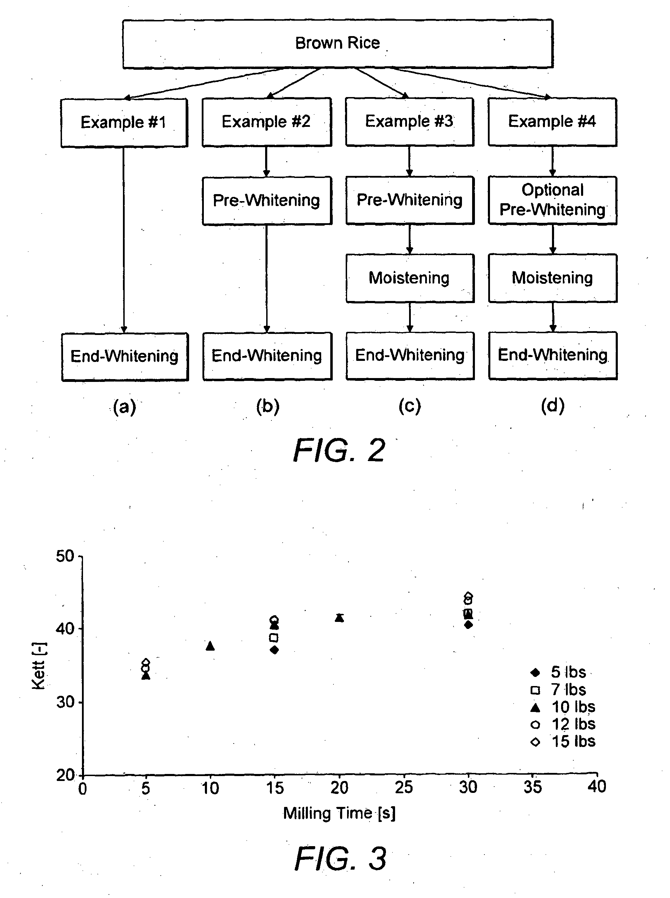

This Example comprises a single whitening step, as illustrated in Figure 2(a).

In this Example, the following steps were performed:
A batch of 500 g of brown rice (Gladio) was loaded into the cover of a miller (a McGill No 3 miller as manufactured by Rapsco, USA). The milling chamber was rotated until the cover was on top, the cover fitted and the milling chamber fixed.

The pressure cap, pressure lever, weight holder and a predetermined weight were put on the cover, and the miller was then operated for a predetermined period of time. This procedure was repeated for batches at weights of 5, 7, 10, 12 and 15 lbs and for milling times of 5, 10, 15, 20 and 30 s.

The resulting rice and abraded bran were then transferred into a sample bag, and allowed to cool.

The resulting rice and bran were then separated using a sifter (an AS 400 sifter as manufactured by Retsch GmbH, Germany) with a sieve having a 1.12 mesh size, operated at 350 rpm for 1 minute. The separated rice comprises headrice and brokens.

The headrice was then separated from the brokens using a trieur (a Mini-Petkus trieur as manufactured by Röber GmbH, Germany) having a variable speed drive (Type VLT-3003 as manufactured by Danfoss, Switzerland). A single passage was employed, with the first classification comprising a 2 mm round hole and a vibrating screen, and the second classification comprising a trieur sleeve with 5.5 mm indentations and a horizontal trough. The feeding rate was minimal and no aspiration was employed.

The moisture content and whiteness of the headrice were then determined. The moisture content was determined using a single kernel moisture detector (Type PQ-5101-1 as manufactured by Kett, USA). The whiteness was measured using a whiteness meter (Type C-300 as manufactured by Kett, USA).

Figure 3 illustrates a plot of whiteness as a function of milling time for given milling weights. As will be observed, the whiteness increases with increasing milling time and increasing milling weight.

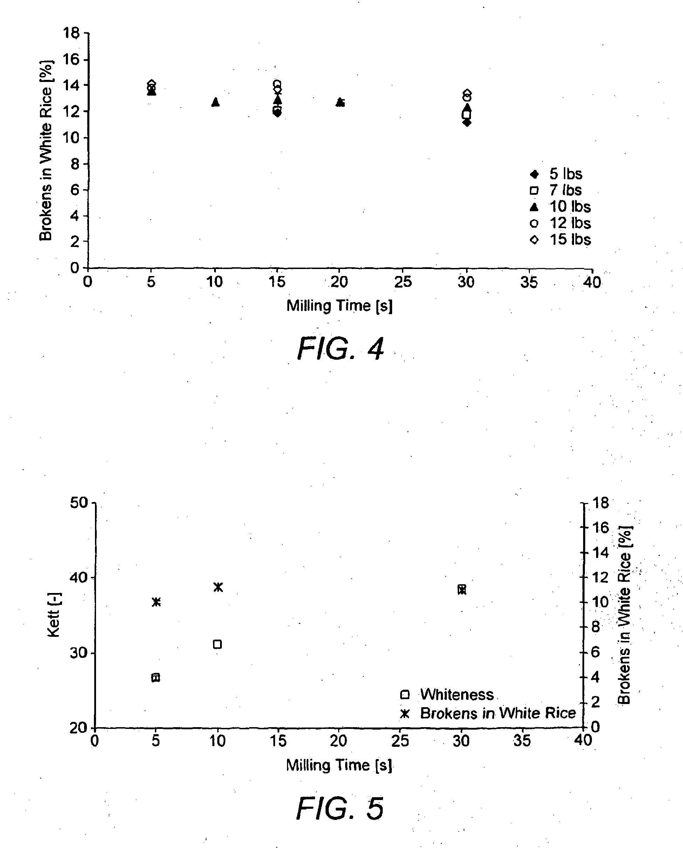

Figure 4 illustrates a plot of the percentage of brokens as a function of milling time for given milling weights. As will be observed, the percentage of brokens increases as a function of milling weight. As will also be observed, contrarily, the percentage of brokens decreases with increasing milling time. This is attributed to the grinding of small brokens to flour.

For a whiteness of about 40 Kett, optimal settings were determined as a milling weight of 10 lbs and a milling time of 15 s, giving a whiteness of 40.5 +/- 0.3 Kett, a percentage of brokens of 12.9 +/- 0.5 % and a percentage of removed bran of 8.5 +/- 0.3%.

### Example #2

This Example comprises pre-whitening and end-whitening steps, as illustrated in Figure 2(b).

In this Example, the following steps were performed:
A batch of 700 g of brown rice (Gladio) was loaded into the cover of a miller (a McGill No 3 miller). The milling chamber was rotated until the cover was on top, the cover fitted and the milling chamber fixed.

The pressure cap, pressure lever, weight holder and a predetermined weight were put on the cover, and the miller was then operated for a predetermined period of time. In this Example, the procedure was performed at a weight of 1 lb and for milling times of 5, 10 and 30 s.

The resulting rice and abraded bran were then transferred into a sample bag, and allowed to cool.

The resulting rice and bran were then separated using a sifter (an AS 400 sifter) with a sieve having a 1.12 mesh size, operated at 350 rpm for 1 minute. The separated rice comprises headrice and brokens.

The headrice was then separated from the brokens using a trieur (a Mini-Petkus trieur) having a variable speed drive (Type VLT-3003). A single passage was employed, with the first classification comprising a 2 mm round hole and a vibrating screen, and the second classification comprising a trieur sleeve with 5.5 mm indentations and a horizontal trough. The feeding rate was minimal and no aspiration was employed.

The moisture content and whiteness of the headrice were then determined. The moisture content was determined using a single kernel moisture detector (Type PQ-5101-1). The whiteness was measured using a whiteness meter (Type C-300).

Figure 5 illustrates a plot of whiteness and the percentage of brokens as a function of milling time. In this Example, the percentage of bran removed in pre-milling is determined from a measurement of whiteness (Kett value), there being a correlation between whiteness and the percentage of bran removed in pre-milling, which enables the percentage of bran removed in pre-milling to be determined from a measurement of whiteness. The optimal milling time is determined as 5 s, which provides a whiteness of 26.7 +/- 0.3 Kett, a percentage of brokens of 10.0 +/- 0.1 % and a percentage of removed bran of 4.5+/-0.1%.

Some of the sample batches were subjected to a horizontal shaking in a container.

A batch of 500 g of the pre-whitened brown rice was then loaded into the cover of a miller (a McGill No 3 miller). The milling chamber was rotated until the cover was on top, the cover fitted and the milling chamber fixed.

The pressure cap, pressure lever, weight holder and a predetermined weight were put on the cover, and the miller was then operated for a predetermined period of time. In this Example, the procedure was performed for batches at weights of 5 and 10 lbs and for milling times of 10, 15, 20 and 30 s.

The resulting rice and abraded bran were then transferred into a sample bag, and allowed to cool.

The resulting rice and bran were then separated using a sifter (an AS 400 sifter) with a sieve having a 1.12 mesh size, operated at 350 rpm for 1 minute. The separated rice comprises headrice and brokens.

The headrice was then separated from the brokens using a trieur (a Mini-Petkus trieur) having a variable speed drive (Type VLT-3003). A single passage was employed, with the first classification comprising a 2 mm round hole and a vibrating screen, and the second classification comprising a trieur sleeve with 5.5 mm indentations and a horizontal trough. The feeding rate was minimal and no aspiration was employed.

The moisture content and whiteness of the headrice were then determined. The moisture content was determined using a single kernel moisture detector (Type PQ-5101-1). The whiteness was measured using a whiteness meter (Type C-300).

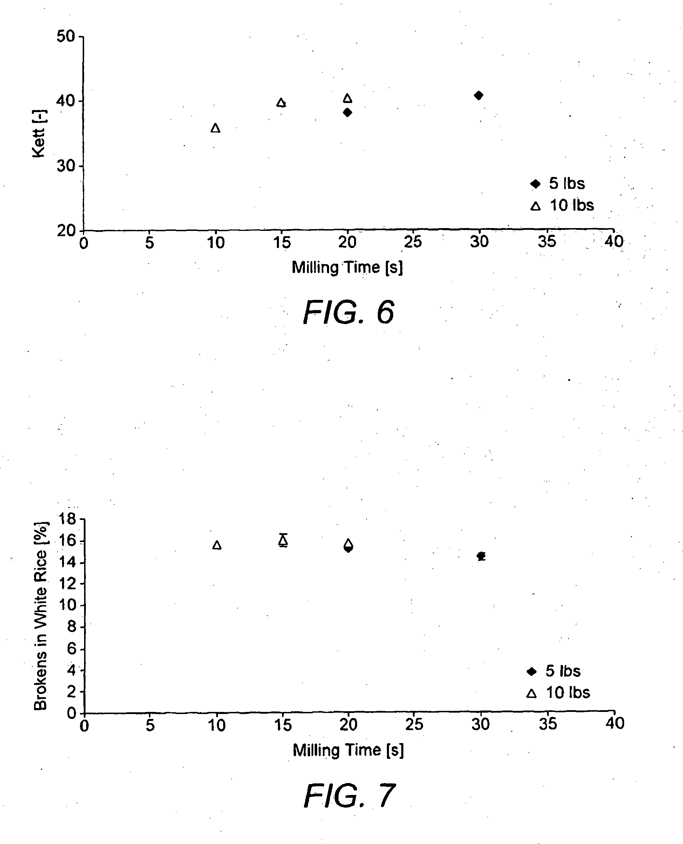

Figures 6 and 7 illustrate, respectively, plots of whiteness and the percentage of brokens following the end-whitening of the pre-whitened rice as a function of milling time for given milling weights. As will be observed, the whiteness increases as a function of milling time, which is consistent with the results for Example #1. For a whiteness of 40 Kett, the optimal milling parameters are determined as a milling weight of 10 lbs and a milling time of 15 s, which results in a whiteness of 39.6 +/- 0.1 Kett, a percentage of brokens of 16 +/-0.6 % and a percentage of removed bran of 8.2 +/1 0.1 %.

### Example #3

This Example comprises pre-whitening, intermediate moistening and end-whitening steps, as illustrated in Figure 2(c).

In this Example, the following steps were performed:
A batch of 700 g of brown rice (Gladio) was loaded into the cover of a miller (a McGill No 3 miller). The milling chamber was rotated until the cover was on top, the cover fitted and the milling chamber fixed.

The pressure cap, pressure lever, weight holder and a predetermined weight were put on the cover, and the miller was then operated for a predetermined period of time. In this Example, pre-milling was performed at a weight of 1 lb and for a milling time of 5 s.

The resulting rice and abraded bran were then transferred into a sample bag, and allowed to cool.

The resulting rice and bran were then separated using a sifter (an AS 400 sifter) with a sieve having a 1.12 mesh size, operated at 350 rpm for 1 minute. The separated rice comprises headrice and brokens.

The headrice was then separated from the brokens using a trieur (a Mini-Petkus trieur) having a variable speed drive (Type VLT-3003). A single passage was employed, with the first classification comprising a 2 mm round hole and a vibrating screen, and the second classification comprising a trieur sleeve with 5.5 mm indentations and a horizontal trough. The feeding rate was minimal and no aspiration was employed.

Following this pre-whitening, a batch of 500 g of the separated headrice was loaded into a 1 L container, a predetermined amount of a moistening agent added using an electronic repetitive pipette, and the container was then closed and shaken, here horizontally, for a predetermined period of contact time. Some of the sample batches were also subjected to a rest time prior to further processing.

Various sample batches were prepared:
(i) 0.5 wt% water as the moistening agent, 1 minute contact time, no rest time
(ii) 1.0 wt% water as the moistening agent, 1 minute contact time, no rest time
(iii) 0.5 wt% water as the moistening agent, 2 minutes contact time, no rest time
(iv) 1.0 wt% water as the moistening agent, 2 minutes contact time, no rest time
(v) 0.5 wt% water as the moistening agent, 1 minute contact time, 29 minutes rest time
(vi) 1.0 wt% water as the moistening agent, 1 minute contact time, 29 minutes rest time

Following the contact time and any rest time, the moistened batch of pre-whitened brown rice was then immediately end-whitened.

The moistened batch of pre-whitened brown rice was loaded into the cover of a miller (a McGill No 3 miller). The milling chamber was rotated until the cover was on top, the cover fitted and the milling chamber fixed.

The pressure cap, pressure lever, weight holder and a predetermined wight were put on the cover, and the miller was then operated for a predetermined period of time. In this Example, the procedure was performed at a weight of 10 lbs and for a milling time of 15 s.

The resulting rice and abraded bran were then transferred into a sample bag, and allowed to cool.

The resulting rice and bran were then separated using a sifter (an AS 400 sifter) with a sieve having a 1.12 mesh size, operated at 350 rpm for 1 minute. The separated rice comprises headrice and brokens.

The headrice was then separated from the brokens using a trieur (a Mini-Petkus trieur) having a variable speed drive (Type VLT-3003). A single passage was employed, with the first classification comprising a 2 mm round hole and a vibrating screen, and the second classification comprising a trieur sleeve with 5.5 mm indentations and a horizontal trough. The feeding rate was minimal and no aspiration was employed.

The moisture content and whiteness of the headrice were then determined. The moisture content was determined using a single kernel moisture detector (Type PQ-5101-1). The whiteness was measured using a whiteness meter (Type C-300).

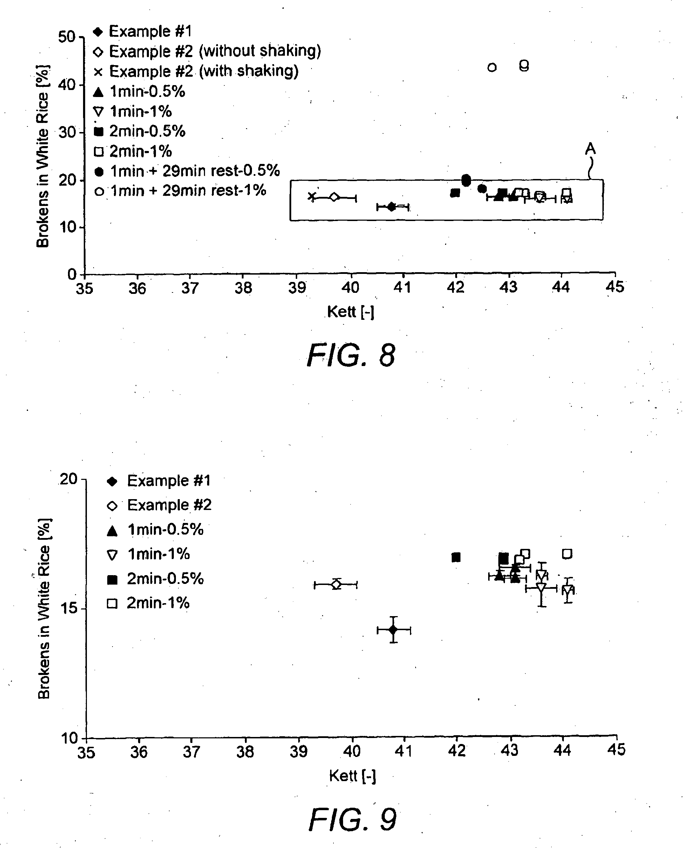

Figure 8 illustrates a plot of the percentage of brokens as a function of whiteness of the separated headrice. As will be observed, the moistening step provides for a higher whiteness, which may be explained by increased friction between kernels or higher reflectivity at the polished rice surface. As will also be observed, shaking does not appear to cause additional brokens, in that the percentage of brokens for Example #2 with shaking is within the standard deviation for the percentage of brokens for Example #2 without shaking. As will further be observed, the provision of a rest time leads to an increased number of brokens and reduced whiteness.

Figure 9 illustrates, in enlarged scale, section A of the plot in Figure 8. As will be observed, the longer contact time of 2 minutes results in a higher percentage of brokens, irrespective of the amount of the moistening agent. Further, for those samples having the 1 minute contact time, the higher, 1 wt% amount of moistening agent resulted in higher caking in the miller.

### Example #4

This Example comprises moistening and end-whitening steps, with and without pre-whitening steps, as illustrated in Figure 2(d).

In this Example, the following steps were performed:
For those samples which were pre-whitened, a batch of 700 g of brown rice (Gladio) was loaded into the cover of a miller (a McGill No 3 miller). The milling chamber was rotated until the cover was on top, the cover fitted and the milling chamber fixed.

The pressure cap, pressure lever, weight holder and a predetermined weight were put on the cover, and the miller was then operated for a predetermined period of time. In this Example, the procedure was performed at a weight of 1 lb and for a milling time of 5 s.

The resulting rice and abraded bran were then transferred into a sample bag, and allowed to cool.

The resulting rice and bran were then separated using a sifter (an AS 400 sifter) with a sieve having a 1.12 mesh size, operated at 350 rpm for 1 minute. The separated rice comprises headrice and brokens.

The headrice was then separated from the brokens using a trieur (a Mini-Petkus trieur) having a variable speed drive (Type VLT-3003). A single passage was employed, with the first classification comprising a 2 mm round hole and a vibrating screen, and the second classification comprising a trieur sleeve with 5.5 mm indentations and a horizontal trough. The feeding rate was minimal and no aspiration was employed.

Batches of either the pre-whitened headrice or the brown rice (Gladio), where no pre-whitening step was performed, were then loaded into a 1L container, a predetermined amount of a moistening agent added using an electronic repetitive pipette, and the container was then closed and shaken, here horizontally, for a predetermined period of contact time.

Various sample batches were prepared:
(i) 0.5 wt% water as the moistening agent, 1 minute contact time
(ii) 0.5 wt% Celluclast (RTM) solution (0.3 wt% Celluclast (RTM) and 0.2 wt% water) as the moistening agent, 1 minute contact time
(iii) 0.5 wt% Viscozyme (RTM) solution (0.3 wt% Viscozyme (RTM) and 0.2 wt% water) as the moistening agent, 1 minute contact time
(iv) 0.5 wt% NaCl solution (5 wt% NaCl in water) as the moistening agent, 1 minute contact time
(v) 0.5 wt% NaCl solution (10 wt% NaCl in water) as the moistening agent, 1 minute contact time
(vi) 0.5 wt% sorbitol solution (5 wt% sorbitol in water) as the moistening agent, 1 minute contact time
(vii) 0.5 wt% sorbitol solution (10 wt% sorbitol in water) as the moistening agent, 1 minute contact time

The moistened batch of brown rice was then loaded into the cover of a miller (a McGill No 3 miller). The milling chamber was rotated until the cover was on top, the cover fitted and the milling chamber fixed.

The pressure cap, pressure lever, weight holder and a predetermined weight were put on the cover, and the miller was then operated for a predetermined period of time. In this Example, the procedure was performed both at a weight of 10 lbs and for a milling time of 15 s, and a weight of 1 lb and for a milling time of 15 s.

The resulting rice and abraded bran were then transferred into a sample bag, and allowed to cool.

The resulting rice and bran were then separated using a sifter (an AS 400 sifter) with a sieve having a 1.12 mesh size, operated at 350 rpm for 1 minute. The separated rice comprises headrice and brokens.

The headrice was then separated from the brokens using a trieur (a Mini-Petkus trieur) having a variable speed drive (Type VLT-3003). A single passage was employed, with the first classification comprising a 2 mm round hole and a vibrating screen, and the second classification comprising a trieur sleeve with 5.5 mm indentations and a horizontal trough. The feeding rate was minimal and no aspiration was employed.

The moisture content and whiteness of the separated headrice were then determined. The moisture content was determined using a single kernel moisture detector (Type PQ-5101-1). The whiteness was measured using a whiteness meter (Type C-300).

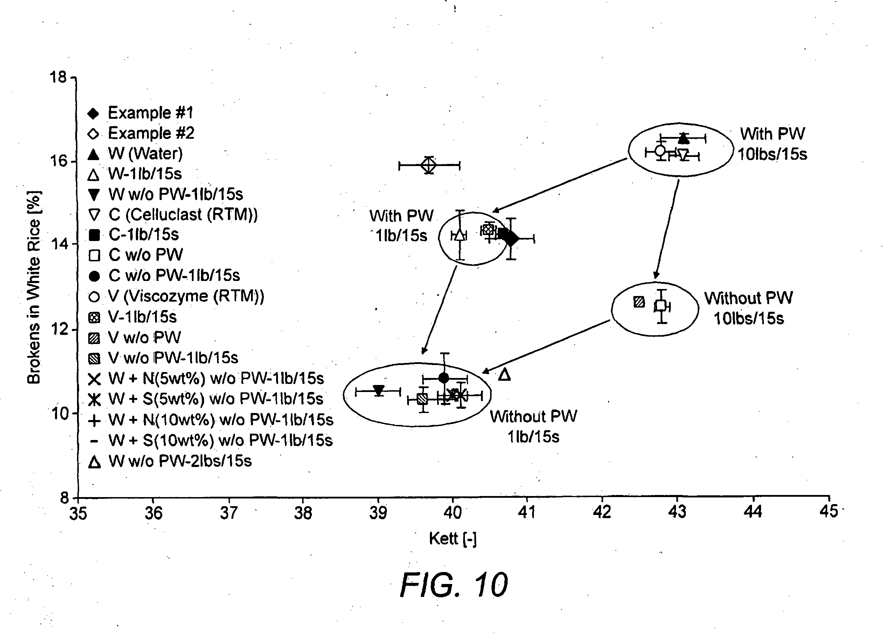

Figure 10 illustrates a plot of the percentage of brokens as a function of whiteness of the separated headrice.

As will be observed, a reduction in milling weight in the end-whitening step leads to a reduction in the whiteness and the percentage of brokens (cloud top-right to cloud top-left and cloud bottom-right to cloud bottom-left).

As will also be observed, the exclusion of the pre-whitening step for a given milling weight reduces the percentage of brokens significantly and the whiteness only marginally (cloud top-right to cloud bottom-right and cloud top-left to cloud bottom-left).

As will be further observed, the moistening agents containing only sodium chloride and sorbitol exhibit an increased whiteness as compared to the use of water alone of about 1 Kett, and the use of enzymes does not provide for increased whiteness or a reduced percentage of brokens as compared to the moistening agents containing only sodium chloride and sorbitol.

For achieving a whiteness of 40 Kett, the use of a moistening agent containing sodium chloride or sorbitol achieves an increase in the headrice yield of about 3.8%. As will be understood, by reference to the Sankey diagram in Figure 1, this increase in headrice yield is very significant, particularly given the volume of rice that is processed.

This result is particularly surprising given the absence of an enzyme. It is postulated that the benefit of the sorbitol and sodium chloride additives in the moistening agent is in reducing the water availability at the grain surface after end-whitening and during the later cooling phase.

### Example #5

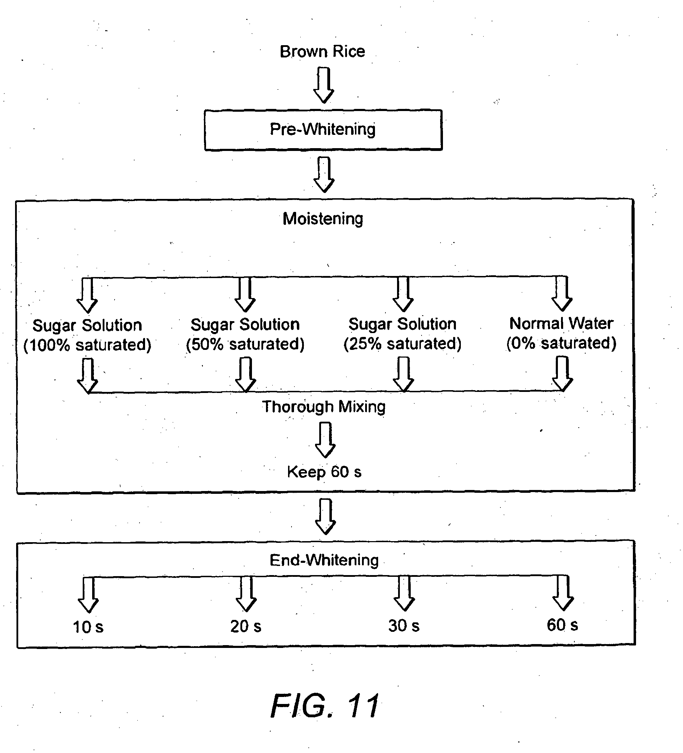

This Example comprises pre-whitening, intermediate moistening and end-whitening steps, as illustrated in Figure 11.

In this Example, the following steps were performed:
Samples of 100 g of brown rice (parboiled paddy, Andhra Poni), which was precleaned and de-husked, were milled in an abrasive polisher mill for a milling time of 20 s.

The resulting rice and abraded bran were then transferred into a sample bag, and allowed to cool, and then separated using a sifter.

The separated rice comprises headrice and brokens, and the headrice was then separated from the brokens.

Following this pre-whitening, a batch of the separated headrice was loaded into a container, a predetermined amount of a moistening agent was applied thereto as a mist or spray, and the container was then closed and the headrice and the moistening agent thoroughly mixed.

Following mixing, the sample batches were then subjected to a rest time of 1 minute prior to further processing.

Various sample batches were prepared with moistening agents comprising water only (0 %), 25 % saturated sugar solution at room temperature, 50 % saturated sugar solution at room temperature, and 100 % saturated sugar solution at room temperature.

Following the rest time, the moistened batch of pre-whitened brown rice was then immediately end-whitened.

The moistened batches of pre-whitened brown rice were milled in a friction polisher mill for milling times of 10 s, 20 s, 30 s and 1 minute.

The resulting rice and abraded bran were then transferred into a sample bag, and allowed to cool, and then separated using a sifter.

The separated rice comprises headrice and brokens, and the headrice was then separated from the brokens.

The whiteness of the headrice was then determined for each of the resulting samples.

The measured results for this Example are given below.

| Saturation (%) | Abrasive Milled Rice Weight (g) | Moistened Rice Weight (g) | Friction Milling Time (s) | Friction Milled Rice Weight (g) | Kett Value |
|---|---|---|---|---|---|
| 100 | 100 | 101.5 | 10 | 95.6 | 24 |
| 50 | 100 | 101.5 | 10 | 96 | 23.8 |
| 25 | 100 | 101.5 | 10 | 96.2 | 23 |
| 0 | 100 | 101.5 | 10 | 96.2 | 22.2 |
| 100 | 95.6 | 97.1 | 20 | 94.5 | 24 |
| 50 | 96 | 97.5 | 20 | 94.8 | 23.8 |
| 25 | 96.2 | 97.7 | 20 | 94.6 | 22.6 |
| 0 | 96.2 | 97.7 | 20 | 94.3 | 22 |
| 100 | 94.5 | 96 | 30 | 93.3 | 24 |
| 50 | 94.8 | 96.3 | 30 | 93.8 | 23.8 |
| 25 | 94.6 | 96.1 | 30 | 93.9 | 22.9 |
| 0 | 94.3 | 95.8 | 30 | 93.1 | 22.5 |
| 100 | 93.3 | 94.8 | 60 | 90.6 | 26 |
| 50 | 93.8 | 95.3 | 60 | 91.6 | 24.7 |
| 25 | 93.9 | 95.4 | 60 | 91.3 | 24 |
| 0 | 93.1 | 94.6 | 60 | 91.5 | 23.5 |

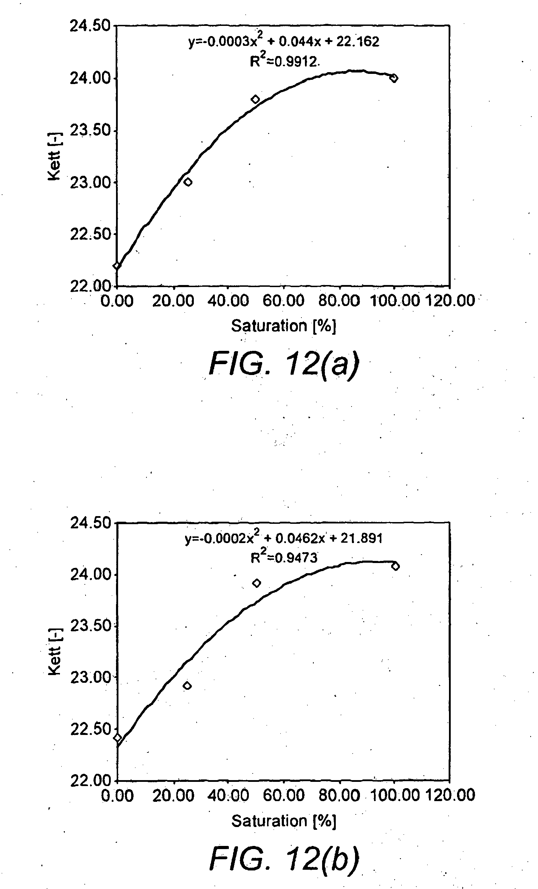

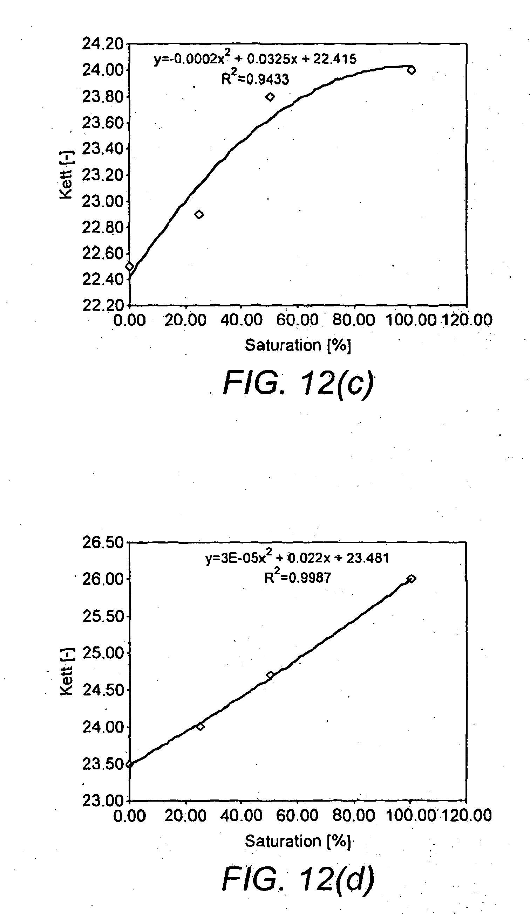

Figures 12(a) to (d) illustrate plots of whiteness as a function of percentage of saturation of the additive in the moistening agent. As will be observed, there is a significant increase in whiteness with an increased saturation of sugar in the water moistening agent.

Finally, it will be understood that the present invention has been described in its preferred embodiments and can be modified in many different ways without departing from the scope of the invention as defined by the appended claims.

### References:

[1] Kunde, Karl-Heinz, Reis - seine Bedeutung und Bearbeitung, Die Mühle + Mischfuttertechnik, Heft 32/33, 124, Jahrgang, 1987
[2] Champagne, Elaine T, Rice: Chemistry and Technology (Third Edition), American Association of Cereal Chemists, Inc., St Paul, Minnesota, USA, 2004
[3] Arora, Gopika et al, Optimization of Process Parameters for Milling of Enzymatically Pretreated Basmati Rice, Journal of Food Engineering, 82, 2007
[4] Das, Mithu et al, Enzymatic Polishing of Rice - A New Processing Technology, LWT - Food Science and Technology, 41, 2008
[5] Das, Mithu et al, Evaluation of Physiochemical Properties of Enzyme Treated Brown Rice (Part B), LWT - Food Science and Technology, 41, 2007
[6] Hay, Jordan O et al, Mechanical and Enzymatic Separation of Ripening Rice Caryopsis Tissues, Seed Science Research, 16, 2006

## Claims

1. A process for whitening rice, comprising the steps of:
moistening brown rice with a moistening agent comprising water and an additive comprising at least one of a sugar or a derivative thereof, including a sugar alcohol, and sodium chloride; and
mechanically whitening the moistened brown rice after the moistening step.

2. The process of claim 1, wherein the moistening agent contains no enzyme.

3. The process of claim 1 or 2, wherein the moistening agent is 100 % saturated with the additive at room temperature, or at least 75 % saturated with the additive at room temperature, or at least 50 % saturated with the additive at room temperature, or at least 25 % saturated with the additive at room temperature.

4. The process of any of claims 1 to 3, wherein the additive comprises less than 10 wt% of the moistening agents, or less than 5 wt% of the moistening agent.

5. The process of any of claims 1 to 4, wherein the additive comprises a sugar.

6. The process of any of claims 1 to 4, wherein the additive comprises a sugar derivative, or a sugar alcohol, or sorbitol.

7. The process of any of claims 1 to 4, wherein the additive comprises sodium chloride.

8. The process of any of claims 1 to 7, wherein the moistening step comprises applying the moistening agent to the brown rice, such as by mixing together the brown rice and the moistening agent, or applying the moistening agent to the brown rice in a batch process, such as by mixing in a container, or applying the moistening agent to the brown rice in a continuous process, such as by mixing continuous feeds of the brown rice and the moistening agent, or applying the moistening agent as a spray or mist.

9. The process of claim 8, wherein the moistening agent is applied to the brown rice for less than 2 minutes, or less than 1.5 minutes, or less than 1 minute, or about 1 minute.

10. The process of any of claims 1 to 9, wherein the step of whitening the moistened brown rice is performed immediately after the moistening step.

11. The process of any of claims 1 to 10, wherein, following application of the moistening agent to the brown rice, the moistening step includes a rest period, or a rest period of less than 30 minutes, or less than 10 minutes, or less than 2 minutes, or less than 1 minute, or about 1 minute.

12. The process of any of claims 1 to 11, wherein the moistening agent is added to the brown rice in an amount of less than 2 wt%, or less than 1 wt%, or less than 0.5 wt%.

13. The process of any of claims 1 to 12, wherein no mechanical whitening step is performed prior to the moistening step.

14. The process of any of claims 1 to 13, wherein the step of whitening the moistened brown rice comprises milling the moistened brown rice.

15. The process of any of claims 1 to 14, wherein the whitening step is performed to achieve a whiteness of 40 Kett.

## Patentansprüche

1. Verfahren zum Bleichen von Reis, umfassend die folgenden Schritte:
Anfeuchtet von braunem Reis mit einem Befeuchtungsmittel, das Wasser und ein Additiv umfasst, das wenigstens eines aus einem Zucker und einem Derivat davon umfasst, einschließlich einem Zuckeralkohol und Natriumchlorid; und
Mechanisches Bleichen des angefeuchteten braunen Reises nach dem Schritt des Anfeuchtens.

2. Verfahren nach Anspruch 1, wobei das Befeuchtungsmittel kein Enzym enthält.

3. Verfahren nach Anspruch 1 oder 2, wobei das Befeuchtungsmittel 100% mit den Additiv bei Raumtemperatur gesättigt ist, oder wenigstens 75% mit dem Additiv bei Raumtemperatur gesättigt ist, oder wenigstens 50% mit dem Additiv bei Raumtemperatur gesättigt ist, oder wenigstens 25% mit dem Additiv bei Raumtemperatur gesättigt ist.

4. Verfahren nach einem der Ansprüche 1 bis 3, wobei das Additiv weniger als 10 Gew.-% des Befeuchtungsmittels umfasst, oder weniger als 5 Gew.-% des Befeuchtungsmittels.

5. Verfahren nach einen der Ansprüche 1 bis 4, wobei das Additiv einen Zucker umfasst.

6. Verfahren nach einem der Ansprüche 1 bis 4, wobei das Additiv ein Zuckerderivat umfasst, oder einen Zuckeralkohol oder Sorbitol.

7. Verfahren nach einem der Ansprüche 1 bis 4, wobei das Additiv Natriumchlorid umfasst.

8. Verfahren nach einem der Ansprüche 1 bis 7, wobei der Befeuchtungsschritt das Anwenden des Befeuchtungsmittels an dem braunen Reis umfasst, zum Beispiel durch Vermischen des braunen Reises und des Befeuchtungsmittels, oder Anwenden des Befeuchtungsmittels an dem braunen Reis in einem Batch-Verfahren, wie zum Beispiel durch Vermischen in einem Behälter, oder Anwenden des Befeuchtungsmittels an dem braunen Reis in einem fortlaufenden Verfahren, wie zum Beispiel durch Mischen fortlaufender Einspeisungen des braunen Reises und des Befeuchtungsmittels, oder Anwenden des Befeuchtungsmittels als Spray oder Nebel.

9. Verfahren nach Anspruch 8, wobei das Befeuchtungsmittel für weniger als 2 Minuten an dem braunen Reis angewendet wird, oder weniger als 1,5 Minuten, oder weniger als 1 Minute, oder etwa 1 Minute.

10. Verfahren nach einem der Ansprüche 1 bis 9, wobei der Schritt des Bleichens des befeuchteten braunen Reises unmittelbar nach dem Befeuchtungsschritt durchgeführt wird.

11. Verfahren nach einem der Ansprüche 1 bis 10, wobei, nach der Anwendung des Befeuchtungsmittels an dem braunen Reis, der Schritt des Befeuchtens eine Ruhezeit umfasst, oder eine Ruhezeit von weniger als 30 Minuten, oder weniger als 10 Minuten, oder weniger als 2 Minuten, oder weniger als 1 Minute, oder etwa 1 Minute.

12. Verfahren nach einem der Ansprüche 1 bis 11, wobei das Befeuchtungsmittel dem braunen Reis in einer Menge von weniger als 2 Gew.-%, oder weniger als 1 Gew.-% oder weniger als 0,5 Gew.-% hinzugefügt wird.

13. Verfahren nach einem der Ansprüche 1 bis 12, wobei kein mechanischer Bleichungsschritt vor dem Befeuchtungsschritt angewendet wird.

14. Verfahren nach einem der Ansprüche 1 bis 13, wobei der Schritt des Bleichens des befeuchteten braunen Reises das Mahlen des befeuchteten braunen Reises umfasst.

15. Verfahren nach einem der Ansprüche 1 bis 14, wobei der Bleichungsschritt durchgeführt wird, um eine Weißheit von 40 Kett zu erzielen.

## Revendications

1. Procédé de blanchiment de riz, comprenant les étapes de :
humectage de riz brun avec un agent humectant comprenant de l'eau et un additif comprenant au moins l'un parmi un sucre ou un de ses dérivés, incluant un alcool de sucre,
et du chlorure de sodium et
blanchiment mécanique le riz brun humecté après l'étape d'humectage.

2. Procédé selon la revendication 1, dans lequel l'agent humectant ne contient pas d'enzyme.

3. Procédé selon la revendication 1 ou 2, dans lequel l'agent humectant est saturé à 100% avec l'additif à température ambiante, ou
au moins saturé à 75% avec l'additif à température ambiante, ou
au moins saturé à 50% avec l'additif à température ambiante, ou
au moins saturé à 25% avec l'additif à température ambiante.

4. Procédé selon l'une des revendications 1 à 3, dans lequel l'additif constitue moins de 10% en poids de l'agent humectant, ou moins de 5% en poids de l'agent humectant.

5. Procédé selon l'une des revendications 1 à 4, dans lequel l'additif comprend un sucre.

6. Procédé selon l'une des revendications 1 à 4, dans lequel l'additif comprend un dérivé de sucre, ou un alcool de sucre ou du sorbitol.

7. Procédé selon l'une des revendications 1 à 4, dans lequel l'additif comprend du chlorure de sodium.

8. Procédé selon l'une des revendications 1 à 7, dans lequel l'étape d'humectage comprend l'application de l'agent humectant au riz brun, telle que par mélange du riz brun et de l'agent humectant, ou l'application de l'agent humectant au riz brun dans un traitement par lots, tel que par mélange dans un récipient, ou l'application de l'agent humectant au riz brun dans un procédé continu, tel que par mélange d'alimentations continues du riz brun et de l'agent humectant, ou l'application de l'agent humectant par pulvérisation ou brumisation.

9. Procédé selon la revendication 8, dans lequel l'agent humectant est appliqué au riz brun pendant moins de 2 minutes, ou moins de 1,5 minute, ou moins de 1 minute ou environ 1 minute.

10. Procédé selon l'une des revendications 1 à 9, dans lequel l'étape de blanchiment du riz brun humecté est opérée immédiatement après l'étape d'humectage.

11. Procédé selon l'une des revendication 1 à 10, dans lequel, suite à l'application de l'agent humectant au riz brun, l'étape d'humectage comprend une période de repos, ou une période de repos de moins de 30 minutes, ou de moins de 10 minutes, ou de moins de 2 minutes, ou de moins d'une minute, ou d'environ 1 minute.

12. Procédé selon l'une des revendications 1 à 11, dans lequel l'agent humectant est ajouté au riz brun dans une quantité de moins de 2 % en poids, ou de moins de 1% en poids, ou de moins de 0,5 % en poids.

13. Procédé selon l'une des revendications 1 à 12, dans laquelle aucune étape de blanchiment mécanique n'est opérée avant l'étape d'humectage.

14. Procédé selon l'une des revendications 1 à 13, dans lequel l'étape de blanchiment du riz brun humecté comprend la mouture du riz brun humecté.

15. Procédé selon l'une des revendications 1 à 14, dans lequel l'étape de blanchiment est opérée pour atteindre une blancheur de 40 Kett.
